# FASCICULE DE BREVET EUROPEEN

(11) **EP 3 199 405 B1**
(45) Date de publication et mention de la délivrance du brevet: **03.04.2019**
(21) Numéro de dépôt: 17153813.5
(22) Date de dépôt: 30.01.2017
(51) Int. Cl.: B60R 9/058, F16B 5/02, B60R 9/04, F16B 37/06

(54) **BARRE DE TOIT POUR VÉHICULE AUTOMOBILE ET SYSTÈME DE FIXATION ASSOCIÉ**
DACHLASTENTRÄGER FÜR KRAFTFAHRZEUG, UND ENTSPRECHENDES BEFESTIGUNGSSYSTEM
ROOF BAR FOR A MOTOR VEHICLE AND ASSOCIATED ATTACHMENT SYSTEM

(30) Priorité: 01.02.2016 FR 1650788
(43) Date de publication de la demande: 02.08.2017
(73) Titulaire: Renault s.a.s, 92100 Boulogne-Billancourt (FR)
(72) Inventeur: PALLU, Gilles, 78770 ANDELU (FR); RANC, Maximilien, 78000 VERSAILLES (FR); LOZACHMEUR, Stephanie, 78000 VERSAILLES (FR)

(56) Documents cités:
- EP-A2- 2 716 500
- DE-A1- 3 133 932
- DE-U1-202004 018 079
- DE-U1-202011 103 827

## Description

L'invention a pour objet les systèmes de barres de toit automobiles. Les barres de toit fixées sur les toits de véhicules automobiles et plus particulièrement sur leurs bords latéraux sont orientées suivant la direction longitudinale avant-arrière du véhicule et contribuent à la définition du style du véhicule. Elles permettent également d'arrimer au toit des objets volumineux ou des coffres amovibles, éventuellement au moyen de supports de charge additionnels. Les barres doivent donc être fixées solidement au toit, sans affecter l'étanchéité aux intempéries de celui-ci. Suivant la configuration du toit du véhicule, les hauteurs relatives de la barre par rapport à la tôle extérieure du toit peuvent varier. En outre, les dispersions dimensionnelles, lors de la fabrication de la carrosserie du véhicule, peuvent nécessiter une compensation de la hauteur relative entre la barre du toit et la tôle à laquelle elle est accrochée.

L'invention a pour objet les barres de toit pouvant être utilisées indifféremment sur plusieurs modèles de véhicules, par exemple alternativement sur des véhicules à toit vitré ou à toit ouvrant. Dans de tels véhicules, la portion avant du toit peut présenter une portion surbaissée, ou présenter un renfoncement par rapport à une zone arrière du pavillon du véhicule. Dans de telles configurations, la barre de toit peut être typiquement accrochée à des empilages de tôle à épaisseurs jointives à l'avant du véhicule, et la barre de toit peut être liée à l'arrière du véhicule à une portion de pavillon formant une poutre creuse. Il faut alors éviter de déformer cette poutre creuse dans le sens de son épaisseur, en évitant des dispositifs de fixation qui viendraient resserrer les deux épaisseurs de tôle l'une vers l'autre. Le document DE202011103827U1 décrit un système de barre de toit pour véhicule automobile sélon la preambule de la révendication 1 et une procède d'assemblage une barre de toit sur un véhicule.

L'invention a pour but de proposer un système de barre de toit dont les modes de fixation peuvent s'adapter à différentes configurations de véhicules, et dont les modes de fixation prennent également en compte la nature différente et les écarts de position verticales, entre les différentes portions de toit avant et arrière du véhicule auquel la barre est fixée.

A cette fin, il est proposé un système de barre de toit pour véhicule automobile, comprenant
- une barre de toit configurée pour être assemblée dans le sens longitudinal du véhicule,
- au moins un dispositif de fixation avant comprenant un premier écrou ancré dans la barre de toit, le dispositif de fixation avant étant configuré pour venir se fixer sur une première épaisseur de tôle et pour traverser au moins une pièce intermédiaire interposée entre ladite épaisseur de tôle et la barre,
- au moins un dispositif de fixation arrière comportant un deuxième écrou ancré dans la barre de toit, le dispositif de fixation arrière étant configuré pour traverser deux deuxièmes épaisseurs de tôle du pavillon du véhicule écartées l'une de l'autre, le dispositif étant fixé sur au moins l'une des deux deuxièmes épaisseurs de tôle,

Le dispositif de fixation arrière comporte un dispositif d'entretoise réglable apte à compenser l'écartement entre une face inférieure du deuxième écrou, et une deuxième épaisseur de tôle supportée par un élément de côté de caisse du véhicule, le dispositif d'entretoise prenant appui d'une part sur ladite face du deuxième écrou et d'autre part sur ladite deuxième épaisseur de tôle,
et en ce que le premier écrou comporte une zone cylindrique formant une entretoise de hauteur prédéfinie, et de section extérieure sensiblement constante entre la barre de toit et une base d'appui du premier écrou contre la première épaisseur de tôle, de manière à pouvoir traverser un orifice dédié de la pièce intermédiaire.

Le système peut comporter au moins un premier écrou serti dans une portion avant de la barre de toit, comprendre au moins un deuxième écrou d'axe perpendiculaire à la surface locale du pavillon, et serti dans une portion arrière de la barre de toit.

Par « hauteur à l'extérieur de la barre », on entend la longueur parallèlement à l'axe de vissage de l'écrou, de la portion d'écrou dépassant en dessous de la barre une fois l'écrou serti sur la barre.

Le premier écrou peut comporter un orifice axial central, comporter une face basale entourant cet orifice et configurée pour venir en appui sur la première épaisseur de tôle, ladite face basale étant parcourue autour de l'orifice axial central par une nervure circonférentielle d'étanchéité. On désigne souvent ce type de nervure d'étanchéité par le terme "godron".

Avantageusement, le système comprend une première vis configurée pour traverser la première épaisseur de tôle et se visser dans le premier écrou de manière à serrer une extrémité du premier écrou contre la première épaisseur de tôle.

De manière avantageuse, la pièce intermédiaire peut comporter des orifices de montage de diamètre ajusté à la portion de section constante du premier écrou.

Le dispositif d'entretoise du dispositif de fixation arrière peut avantageusement comporter un premier élément avec une face inférieure configurée pour venir en appui sur une face supérieure de l'une parmi les deux deuxièmes épaisseurs de tôle et avec un premier épaulement configuré pour venir en appui sur une face inférieure de l'autre parmi les deux deuxièmes épaisseurs de tôle. Le dispositif d'entretoise peut comprendre un deuxième élément avec un deuxième épaulement configuré pour venir en appui sur la face inférieure du deuxième écrou, le premier élément étant vissable dans le deuxième élément de manière à faire varier la distance entre le premier épaulement et le deuxième épaulement. Le dispositif d'entretoise est configurée pour pouvoir être réglée de manière à ce que la distance entre la face inférieure et le premier épaulement corresponde à la distance entre les deux deuxièmes épaisseurs de tôle.

Lors du vissage, la vis poursuit sa course du dispositif d'entretoise réglable à l'écrou de la barre et maintient ainsi le contact entre l'écrou et le dispositif d'entretoise de la barre.

Le premier élément du dispositif d'entretoise est percé d'un filetage central présentant un sens de vissage inverse du pas de vissage relatif du premier élément dans le deuxième élément, le filetage central présentant le même pas de vis que le filetage interne du deuxième écrou. Le dispositif d'entretoise peut être ainsi déployé axialement par vissage d'une vis qui vient ensuite s'ancrer par vissage dans le deuxième écrou.

Un anneau d'étanchéité en matière polymère peut être placé contre la barre autour du deuxième écrou.

Le dispositif de fixation arrière comporte une deuxième vis de filetage complémentaire des filetages intérieurs du premier élément du dispositif d'entretoise et du deuxième écrou, et de longueur suffisante pour traverser à la fois le dispositif d'entretoise et le deuxième écrou.

Il est également proposé un procédé d'assemblage des éléments de toit d'un véhicule, comprenant les étapes suivantes:
- percer une première portion de tôle du toit du véhicule, sur une ou plusieurs épaisseurs de tôle jointives, de préférence vers l'avant du véhicule
- percer une deuxième portion de tôle du toit du véhicule, sur au moins deux épaisseurs de tôle non jointives, de préférence vers l'arrière du véhicule
- placer une entretoise de hauteur ajustable par vissage au niveau de la deuxième portion percée de tôle de toit, entre les deux tôles non jointives
- fournir une barre de toit avec au moins un premier écrou serti au niveau d'une première portion de longueur de la barre, et au moins un deuxième écrou serti sur une même face de la barre au niveau d'une autre portion de longueur de la barre, le premier écrou serti dépassant de la barre par une portion allongée de section constante, plus longue que la portion du deuxième écrou dépassant de la barre,
- orienter la première portion de longueur de la barre vers l'avant du véhicule
- insérer le premier écrou verticalement au travers d'un élément d'habillage extérieur du véhicule jusqu'à mettre l'extrémité inférieure du premier écrou en appui ou à proximité immédiate de la première portion de tôle du toit du véhicule
- insérer et visser une première vis par dessous la première portion de tôle pour serrer le premier écrou sur la première portion de tôle
- insérer et serrer une deuxième vis par dessous les tôles non jointives, au travers du dispositif d'entretoise et au travers du deuxième écrou, de manière à déployer axialement le dispositif d'entretoise dans l'intervalle disponible entre les tôles non jointives puis venir plaquer le deuxième écrou sur le dispositif d'entretoise ou sur la plus extérieure des tôles non jointives.

Le procédé peut être appliqué pour assembler un même système de barre de toit muni des mêmes éléments de fixation, sur au moins deux types de véhicules présentant à l'avant du toit des éléments d'habillage extérieurs différents.

Par exemple, le procédé peut être appliqué pour assembler un même système de barre de toit sur un premier type de véhicule à toit ouvrant, le ou les premiers écrous étant configurés pour s'insérer au travers d'un élément d'habillage longeant le toit ouvrant, et sur un deuxième type de véhicule à toit en verre fixe, comprenant une semelle polymère placé sous la barre de toit, le ou les premiers écrous étant configurés pour traverser la semelle polymère.

Le procédé peut être utilisé pour assembler les barres de toit d'une gamme de véhicules comprenant au moins deux types de véhicules, dont un premier véhicule de type à toit ouvrant, et un deuxième type de véhicule de type à toit en verre fixe, les deux types de véhicules comprenant un même géométrie de zone arrière de toit en tôle, les barres de toit étant pourvues d'un même premier système d'au moins deux premières fixations en zone avant du véhicule, et étant pourvue d'un même système d'au moins une deuxième fixation différente des premières fixations, au niveau de la portion arrière commune de toit en tôle.

L'élément d'habillage longeant le toit ouvrant peut recouvrir un élément porteur d'une gouttière longeant le toit ouvrant.

Dans ce cas, l'étanchéité est assurée par le godron du premier écrou venant s'appuyer sur la première épaisseur de tôle. Quand il s'agit d'un toit en verre, la semelle placée sous la barre permet de gérer la finition entre la barre de toit et le reste de la caisse.

Quelques buts, caractéristiques et avantages de l'invention apparaîtront à la lecture de la description suivante, donnés uniquement à titre d'exemple non limitatif, et faite en référence aux figures annexées, sur lesquelles :
La figure 1 est une vue schématique d'un système de barres de toit selon l'invention,
La figure 2 est une vue schématique en coupe d'une portion de système de barre de toit selon l'invention, au niveau d'un dispositif de fixation de la barre en zone avant du véhicule,
La figure 3 est une vue schématique en coupe d'une portion du système de barre de toit de la figure 2, toujours en zone avant d'un véhicule, mais assemblé sur un modèle de véhicule différent de celui de la figure 2,
La figure 4 est une vue schématique en perspective d'un élément de dispositif de fixation pouvant être utilisé au niveau des systèmes de barre de toit illustrés en figures 2 et 3,
La figure 5 est une vue schématique en coupe du système de barre de toit des figures 2 et 3, au niveau d'un dispositif de fixation situé en zone arrière d'un véhicule,

Et la figure 6 est une vue schématique en perspective d'un élément d'un dispositif de fixation retenant en zone arrière du véhicule la barre de toit de la figure 5.

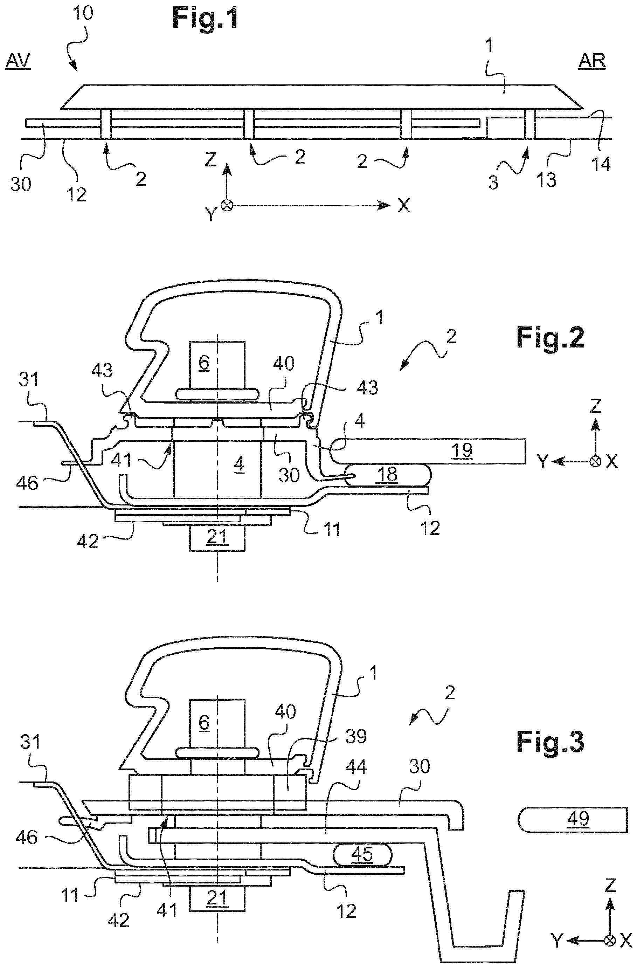

Tel qu'illustré sur la figure 1, système de barres de toit selon l'invention comprend une barre de toit 1, destinée à être placée suivant une direction longitudinale notée X d'un véhicule automobile (dont seules quelques tôles supérieures 12, 13, 14 du toit sont représentées). De façon classique les directions et orientations indiquées dans le présent texte se basent sur un repère orthonormé direct XYZ dans lequel X désigne la direction longitudinale avant-arrière du véhicule, dirigée vers l'arrière du véhicule, Y est la direction transversale, dirigée vers la droite du véhicule, et Z est la direction verticale, dirigée vers le haut.

Sur la figure 1, est illustrée uniquement la zone de toit du véhicule, vue très schématiquement, au niveau de points de fixation de la barre sur le toit, en coupe dans un plan vertical parallèle à la direction longitudinale X d'avancement usuel du véhicule. Le toit du véhicule comprend ainsi une première épaisseur de tôle 12 s'étendant en zone avant du véhicule. Cette même tôle se prolonge en zone arrière du véhicule par une portion 13 de tôle, doublée par une portion 14 recouvrant l'extérieur de la tôle 13 à distance de la tôle 13, et formant la partie supérieure arrière du pavillon du véhicule.

Entre la barre 1 et le toit du véhicule, est interposée une pièce intermédiaire 30 pouvant par exemple assurer des fonctions d'étanchéité, des fonctions de canalisation de l'eau de pluie et/ou des fonctions esthétiques. Cette pièce intermédiaire 30 s'étend ici uniquement sur une longueur du véhicule non doublée par la portion de tôle 14 du pavillon arrière. En zone arrière du véhicule, la seconde tôle 14 du pavillon arrière est espacée de la portion de tôle 13. Suivant les variantes de réalisation, la hauteur de la portion de tôle 14 peut être plus élevée, ou être au contraire moins élevée, que la hauteur de la pièce intermédiaire 30. Un ou plusieurs dispositifs de fixation avant 2 relient la barre de toit et le toit du véhicule, traversant verticalement la pièce intermédiaire 30. Sur sa portion arrière par rapport au véhicule, la barre de toit 1 est fixée par au moins un dispositif de fixation arrière 3 traversant la tôle 14, et fixé sur la portion de tôle 13.

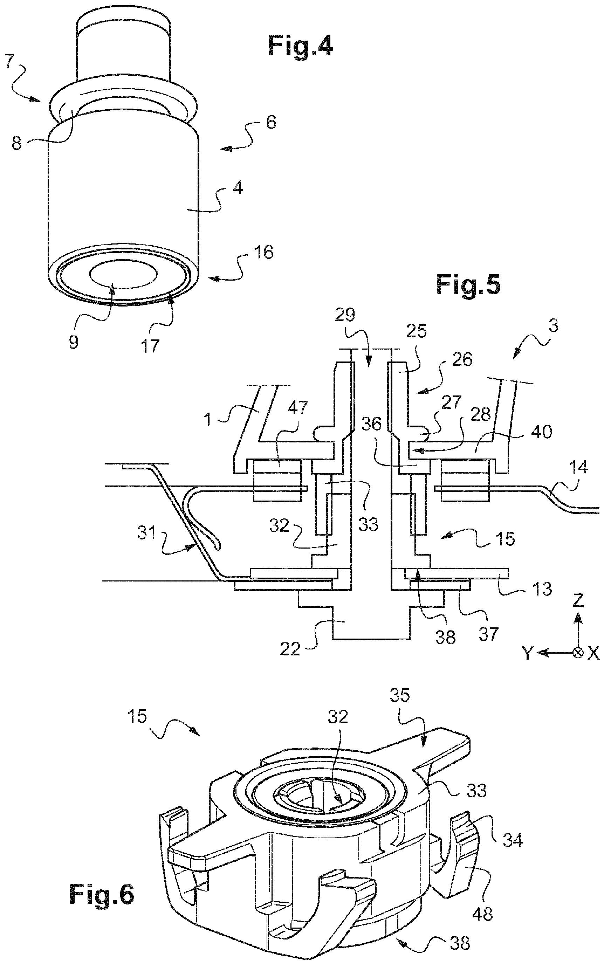

La figure 2 illustre un dispositif de fixation 2 de la barre de toit 1 dans un mode de réalisation où la barre de toit est montée sur un véhicule comportant une portion fixe 19 de toit en verre. Le pavillon avant du véhicule est ici défini par une première épaisseur de tôle 12 sur laquelle est appuyé un système d'étanchéité 18 sur lequel est assemblée une vitre 19 de toit. La première épaisseur de tôle 12 est doublée par une ou plusieurs épaisseurs formant renfort car formant un empilage avec la tôle 12 plus rigide que la tôle 12 seule. Ces autres épaisseurs de tôle sont montées empilées les unes sur les autres de manière à former un empilage de tôle compact au contact de la première épaisseur de tôle 12. Dans l'exemple illustré sur la figure 2, on trouve ainsi un "renfort brancard" 11, une doublure de montant de baie 42, une tôle de côté de caisse 21. Sur une portion avant de la barre de toit 1 est serti au moins un premier écrou 6. La barre présente un profil de poutre creuse dont la paroi inférieure est traversée par l'écrou 6. L'écrou 6 présente des épaulements venant en appui sur la barre inférieure 40 de part et d'autre de cette paroi inférieure 40. L'écrou 6 comporte une portion de section transversale constante 4, s'étendant sous la barre 1 et dont la section transversale est complémentaire d'un orifice 41 ménagé dans la pièce intermédiaire 30. La hauteur de la zone de section constante 4 est conçue pour maintenir la barre 1 à une hauteur prédéfinie -suivant l'axe vertical Z- par rapport à la première épaisseur de tôle 12, sur laquelle s'appuie l'extrémité inférieure de l'écrou 6. Dans l'exemple illustré, la pièce intermédiaire 30 peut notamment assurer des fonctions d'étanchéité, car elle comporte des portions 43 de joint d'accrochage et d'étanchéité reliant la pièce intermédiaire et la barre 1, et comporte des portions de joint à lèvre 46 s'appuyant sur des éléments latéraux du toit du véhicule tel que par exemple la tôle du côté de caisse 31. Une étanchéité supplémentaire du dispositif d'assemblage peut être obtenue en utilisant un écrou 6, dont la face inférieure 16 présente un relief de type godron (illustré en figure 4) permettant d'assurer par serrage métal sur métal, une certaine étanchéité au contact de la première épaisseur de tôle 12. L'écrou 6 est maintenu appuyé sur la face supérieure de la première épaisseur de tôle 12 par une vis 21 insérée dans l'écrou 6 à partir de la face inférieure de l'empilement de tôles disposée contre la tôle 12, ou à partir de la face inférieure de la tôle 12.

La figure 3 illustre, en zone avant du toit du véhicule, le même système de barre de toit que celui de la figure 2, assemblé sur un modèle de véhicule différent, ici un modèle de véhicule à toit ouvrant. On retrouve sur la figure 3 des références communes à la figure 2, les mêmes éléments ou certains éléments similaires étant désignés par les mêmes références. Comme sur la figure 2, la hauteur de la barre 1 par rapport à la première épaisseur de tôle 12, est imposé par la zone de section constante 4 de l'écrou 6, formant entretoise de hauteur constante et prédéfinie à la fabrication de l'écrou. Cette zone de section constante 4 traverse, d'une part, une pièce intermédiaire 30 formant ici enjoliveur de bord de toit ouvrant, et munie d'un joint à lèvres 46 venant en contact avec la tôle de côté de caisse 31 afin d'avoir une bonne finition entre l'enjoliveur et le côté de caisse. Sous cette première pièce intermédiaire 30, est disposée une gouttière 44 de toit ouvrant, dont la position en Z est assurée par un élément d'étanchéité 45 interposé entre la première épaisseur de tôle 12 et la gouttière 44. Entre la pièce intermédiaire 30, posée sur la pièce 44 formant gouttière et la paroi inférieure 40 de la barre de toit 1, est interposée une semelle élastomère 39 afin d'éviter des effets de bruyance de type sifflement liés à de l'air s'engouffrant entre la barre de toit 1 et la pièce intermédiaire 30 et également pour éviter de laisser apparente la technique de fixation utilisée sous la barre de toit.

La même barre de toit 1 selon l'invention, munie du même dispositif de fixation avant (comprenant un ou plusieurs écrous 6 sertis sur la barre) peut ainsi être agencée sur des modèles de véhicules présentant une architecture différente en zone avant du toit du véhicule.

La figure 4 illustre un exemple de géométrie d'écrou 6 fileté pouvant être utilisé dans le dispositif de fixation avant d'une barre de toit selon l'invention. De tels écrous filetés, de type expansible, sont par exemple connus sous le nom de "RIVKLE ®" et sont disponibles auprès de la société fabricante "Bollhoff ®". Les écrous utilisés dans l'invention sont une variante "axialement allongée" de ces écrous expansibles.

L'écrou 6 comporte une zone cylindrique 4 formant une entretoise de hauteur prédéfinie, autour d'un perçage central 9 comportant un filetage permettant d'accrocher une vis. La paroi inférieure 40 de la barre de toit (non représentée sur la figure 4) peut ainsi être typiquement emprisonnée au niveau d'un col de sertissage 8 de l'écrou 6, reliant la zone cylindrique 4 et un renflement radial 7, créé par exemple lors du montage de l'écrou sur la barre par serrage axial de l'écrou. Le renflement radial 7 se crée alors par écrasement d'une zone déformable radialement expansible sous l'effet d'une compression axiale.. L'écrou peut être livré avec la barre en vue du montage de la barre sur le véhicule. L'écrou 6 comporte une face d'appui 16 à son extrémité opposée à la zone d'insertion 5, cette face d'appui étant munie d'un relief périphérique ou d'un relief circonférentiel 17 aussi appelé godron, entourant le perçage central 9 de manière à créer une zone à forte contrainte de compression lorsque l'on vient plaquer l'écrou contre par exemple la première épaisseur de tôle 12. La première épaisseur de tôle 12 peut être ainsi localement déformée dans son épaisseur pour y insérer le relief 17, créant ainsi une étanchéité métal contre métal.

La figure 5 illustre un dispositif de fixation arrière d'un système de barre de toit selon l'invention. Ce système de fixation arrière peut être assemblé sur différents modèles de véhicule, notamment des véhicules présentant une même configuration au niveau de la partie arrière du pavillon, et présentant des configurations différentes au niveau de la portion avant du véhicule. Le dispositif de fixation arrière est choisi de manière à éviter de modifier l'écartement entre une deuxième épaisseur de tôle inférieure 13, et une deuxième épaisseur de tôle supérieure 14. Le dispositif de fixation arrière est en outre choisi de manière à pouvoir ajuster la position en Z d'un écrou 26 serti sur une portion arrière de la barre de toit 1.

Alors que dans le dispositif de fixation avant, l'écrou serti 6 sur la barre de toit est en appui directement sur une des tôles du toit du véhicule, dans le dispositif de fixation arrière, l'écrou arrière 26 est en appui sur un dispositif d'entretoise 15 interposé entre l'épaisseur inférieure de tôle 13 et l'écrou 26. Dans le présent texte, le dispositif d'entretoise est également indifféremment désigné par les termes « entretoise » et « dispositif d'entretoise ». Le dispositif d'entretoise 15 est traversé par une vis 22 vissée par-dessous l'épaisseur de tôle 13, traversant le dispositif d'entretoise 15 et venant s'ancrer dans l'écrou 26. La vis 22 traverse éventuellement un ou plusieurs renforts 37 superposés à l'épaisseur de tôle 13, et comprenant sur l'exemple illustré une portion de tôle 31 de tôle de côté de caisse. L'épaisseur de tôle supérieure 14, est percée d'un orifice de diamètre supérieur au diamètre d'appui de la face inférieure du dispositif d'entretoise 15, ledit diamètre d'appui étant lui-même supérieur à l'orifice ménagé pour la vis 22 dans l'épaisseur de tôle 13. Il est ainsi possible d'insérer le dispositif d'entretoise 15 par la partie supérieure du toit, au travers de l'orifice de la tôle 14, puis d'ajuster la hauteur du dispositif d'entretoise 15. Ce dernier peut par exemple comprendre une portion inférieure d'entretoise 32, vissable dans une portion supérieure d'entretoise 33. L'ajustement de la hauteur du dispositif d'entretoise se fait ainsi par vissage après insertion du dispositif d'entretoise dans l'espace entre les tôles 13 et 14. L'écrou 26 peut être de type expansible similaire à l'écrou 6. Il diffère cependant de l'écrou 6 car la portion d'écrou 26 dépassant de la barre de toit (en dessous de celle-ci), est de hauteur réduite par rapport à la hauteur de la zone de section constante 4 de l'écrou 6. Ainsi, l'écrou 26 comporte également une zone d'insertion de sertissage 25, une fois serti comporte un renflement 27 venant en appui contre la paroi inférieure 40 de la barre de toit 1 par l'intérieur de la barre de toit, et comporte une zone radialement élargie d'appui 36 venant en appui contre la face extérieure de la paroi inférieure 40 de la barre de toit. Une rondelle d'étanchéité 47 peut être collée à la barre de toit autour de l'écrou 26 afin d'éviter l'infiltration d'eau à l'intérieur du perçage ayant servi à insérer le dispositif d'entretoise 1. Le filetage ménagé au niveau du perçage central du deuxième écrou 26 peut être de diamètre supérieur à un filetage intérieur du dispositif d'entretoise 15. Le dispositif d'entretoise 15 peut en effet comporter un filetage intérieur permettant d'insérer une tige filetée dans le dispositif d'entretoise pour ajuster la hauteur du dispositif d'entretoise 15. La tige filetée coopère avec ce filetage pour déployer et allonger le dispositif d'entretoise à la longueur adaptée.

La figure 6 est une vue schématique, en perspective, d'un dispositif d'entretoise 15 pouvant servir au dispositif de fixation arrière d'un système de barre de toit selon l'invention. Dans l'exemple illustré, le dispositif d'entretoise 15 comporte des pattes élastiques 48 fixées sur la portion inférieure d'entretoise 32, configuré pour se déployer radialement une fois le dispositif d'entretoise insérée au travers de la tôle 14, et comportant en partie supérieure des épaulement 34 destinés a venir en appui sur la face inférieure de la tôle 14 Ces pattes élastiques permettent de maintenir le dispositif d'entretoise à l'intérieur du caisson formé par les épaisseurs de tôle 13 et 14, pendant le montage de la barre de toit. La portion supérieure du dispositif d'entretoise 15 reste émergée au-dessus de la tôle 14, et comporte des zones radialement élargies offrant une surface d'appui 35 pour soutenir l'écrou 26, et éviter que celui-ci ne vienne appuyer sur la tôle supérieure 14.

Ainsi, tel qu'il ressort des figures 5 et 6, le dispositif d'entretoise 15 comporte une face inférieure 38 configurée pour venir en appui sur l'une parmi les deux deuxièmes épaisseurs de tôle, ici la tôle 13, comporte un premier élément 32 portant la face inférieure 38, et portant un premier épaulement 34, ici au bout de pattes élastique rattachant l'épaulement 34 à la face basale 38 de l'élément, le premier épaulement 34 étant configuré pour venir en appui, dans la direction opposée à la face basale 38, sur l'autre tôle, ici 14, parmi les deux deuxièmes épaisseurs de tôle. Le dispositif d'entretoise 15 comprend en outre un deuxième élément 33 portant un deuxième épaulement 35 visible sur la figure 6, configuré pour venir en appui, dans la direction opposée à la face 38, sur le deuxième écrou 26. Le premier élément 32 est vissable dans le deuxième élément 33 de manière à faire varier la distance entre le premier épaulement 34 et le deuxième épaulement 35.

A titre d'exemple de réalisation, on peut utiliser par exemple trois fixations identiques à l'avant réparties selon la direction longitudinale X, chacune munie d'un premier écrou dans la zone toit ouvrant ou dans la zone de toit en verre fixe, et utiliser par exemple une seule fixation arrière dans la zone pavillon, munie du second écrou.

L'invention propose également un procédé de montage d'un système de barres de toit sur un véhicule, ou sur une gamme de véhicules comprenant plusieurs configurations différentes de véhicules. Dans ce procédé, on fournit une barre de toit ou une paire de barres de toit, munies d'écrous pré sertis, dont un ou plusieurs écrous situés en zone avant de la barre dépassent de la barre de toit par une zone de section constante, par exemple de hauteur supérieure ou égale au diamètre de l'écrou. La barre comporte, en zone destinée être la zone arrière de la barre de toit, au moins un écrou arrière dépassant d'une longueur inférieure à la hauteur de la zone de section constante du ou des écrous avant. Est également fourni, avec la ou les barres de toit, une ou plusieurs vis avant 21 adaptées aux écrous avant et une ou plusieurs vis arrière 22 adaptées aux écrous arrière, les deux modèles de vis étant de préférence identiques. On insère une entretoise entre deux tôles de la zone de pavillon arrière. On vient ensuite positionner le ou les écrous arrière par dessus les entretoises, et les écrous avant au dessus des orifices dédiés des pièces intermédiaires 30 posées en partie avant du véhicule. On règle l'épaisseur des entretoises arrière à l'aide d'un outil dédié de manière à ce que ces entretoises viennent au contact des écrous arrière de la barre. On remet alors en position la barre et on visse successivement les vis de tous les écrous avant et arrière.

L'invention ne se limite pas aux exemples de réalisations décrits et peut se décliner en de nombreuses variantes.

Le système de barre de toit selon l'invention permet un assemblage rapide sur une gamme de véhicules présentant plusieurs déclinaisons, sans modifier le système de barre de toit, et en tenant compte d'éventuelles dispersions de cotes verticales de la portion avant du véhicule par rapport à la portion arrière.

## Revendications

1. Système de barre de toit pour véhicule automobile, comprenant
- une barre de toit (1) configurée pour être assemblée dans le sens longitudinal (X) du véhicule,
- au moins un dispositif de fixation avant (2) comprenant un premier écrou (6) ancré dans la barre de toit (1), le dispositif de fixation avant (2) étant configuré pour venir se fixer sur une première épaisseur de tôle (12) et pour traverser au moins une pièce intermédiaire (30) interposée entre ladite épaisseur de tôle et la barre, **caractérisé en ce que** le système comprend
- au moins un dispositif de fixation arrière (3) comportant un deuxième écrou (26) ancré dans la barre de toit, le dispositif de fixation arrière étant configuré pour traverser deux deuxièmes épaisseurs de tôle (13, 14) du pavillon du véhicule écartées l'une de l'autre, le dispositif étant fixé sur au moins l'une des deux deuxièmes épaisseurs de tôle, et **en ce que** le dispositif de fixation arrière (3) comporte un dispositif d'entretoise (15) réglable, distinct du deuxième écrou, apte à compenser l'écartement entre une face inférieure du deuxième écrou, et une deuxième épaisseur de tôle supportée par un élément de côté de caisse du véhicule, le dispositif d'entretoise prenant appui d'une part sur ladite face du deuxième écrou et d'autre part sur ladite deuxième épaisseur de tôle,
et **en ce que** le premier écrou (6) comporte une zone cylindrique (4) formant une entretoise de hauteur prédéfinie, et de section extérieure sensiblement constante, entre la barre de toit (1) et une base d'appui (16) du premier écrou (6) contre la première épaisseur de tôle (12), de manière à pouvoir traverser un orifice dédié (41) de la pièce intermédiaire (30).

2. Système de barre de toit selon la revendication 1, comportant au moins un premier écrou (6) serti dans une portion avant de la barre de toit (1), comprenant au moins un deuxième écrou (26) d'axe parallèle à l'axe du premier écrou et serti dans une portion arrière de la barre de toit (1), la hauteur à l'extérieur de la barre du premier écrou (6) une fois serti, étant plus longue que la hauteur à l'extérieur de la barre du deuxième écrou (26).

3. Système de barre de toit selon la revendication 2, dans lequel le premier écrou (6) comporte un orifice axial central (9), comporte une face basale (16) entourant l'orifice axial central et configurée pour venir en appui sur la première épaisseur de tôle (12), ladite face basale étant parcourue, autour de l'orifice axial central, par une nervure circonférentielle d'étanchéité (17).

4. Système de barre de toit selon l'une des revendications précédentes, dans lequel la portion d'entretoise (15) du dispositif de fixation arrière (3) comporte une face inférieure (38) configurée pour venir en appui sur l'une parmi les deux deuxièmes épaisseurs de tôle, comporte un premier élément (32) portant la face inférieure (38) et portant un premier épaulement (34) configuré pour venir en appui, dans la direction opposée, sur l'autre parmi les deux deuxièmes épaisseurs de tôle, et comporte un deuxième élément (33) portant un deuxième épaulement (35) configuré pour venir en appui sur le deuxième écrou (26), le premier élément (32) étant vissable dans le deuxième élément (33) de manière à faire varier la distance entre le premier épaulement (34) et le deuxième épaulement (35).

5. Système de barre de toit selon la revendication 4, dans lequel le premier élément (32) est percé d'un filetage central présentant un sens de vissage inverse du pas de vissage relatif du premier élément (32) dans le deuxième élément (33), le filetage central présentant le même pas de vis que le filetage interne du deuxième écrou (26).

6. Système de barre de toit selon les revendications 4 ou 5, comportant un anneau d'étanchéité (47) en matière polymère placé contre la barre (1) autour du deuxième écrou (26).

7. Système de barre de toit selon la revendication 6, comprenant en outre une vis (22), de filetage complémentaire des filetages intérieurs du premier élément de l'entretoise (32) et du deuxième écrou (26), et de longueur suffisante pour traverser l'entretoise (15) et s'accrocher dans le deuxième écrou (26).

8. Procédé d'assemblage des éléments de toit d'un véhicule, comprenant les étapes :
- percer une première portion (12) de tôle du toit du véhicule, sur une ou plusieurs épaisseurs de tôle jointives,
- percer une deuxième portion de tôle du toit du véhicule, sur au moins deux épaisseurs de tôle non jointives (13, 14),
- placer une entretoise (15) de hauteur ajustable par vissage au niveau de la deuxième portion percée de tôle de toit, entre les deux tôles non jointives (13, 14),
- fournir une barre de toit (1) avec au moins un premier écrou (6) serti au niveau d'une première portion de longueur de la barre, et au moins un deuxième écrou (26) serti sur une même face de la barre au niveau d'une autre portion de longueur de la barre, le premier écrou serti (6) dépassant de la barre (1) par une portion allongée (4) de section constante, plus longue que la portion du deuxième écrou (26) dépassant de la barre (1),
- insérer le premier écrou (6) verticalement au travers d'un élément (30) d'habillage extérieur du véhicule jusqu'à mettre l'extrémité inférieure du premier écrou en appui ou à proximité immédiate de la première portion de tôle (12) du toit du véhicule
- insérer et visser une première vis (21) par en dessous de la première portion de tôle (12) pour serrer le premier écrou (6) sur la première portion de tôle (12),
- insérer et serrer une deuxième vis par en dessous les tôles non jointives (13, 14), au travers de l'entretoise (15) et au travers du deuxième écrou (26), de manière à déployer axialement l'entretoise (15) dans l'intervalle disponible entre les tôles non jointives (13, 14) puis venir plaquer le deuxième écrou (26) sur l'entretoise (15) ou sur la plus extérieure des tôles non jointives.

9. Procédé selon la revendication 8, appliqué pour assembler un même système de barre de toit muni des mêmes éléments de fixation, sur deux types de véhicules présentant un même type de fixation arrière sur pavillon, et présentant à l'avant du toit, des éléments d'habillage extérieurs (30) différents, correspondant, pour un premier type de véhicule, au contour d'un toit en verre fixe, et correspondant, pour un second type de véhicule, au contour d'un toit ouvrant.

10. Procédé selon la revendication 9, appliqué pour assembler les barres de toit d'une gamme de véhicules comprenant au moins deux types de véhicules, dont un premier véhicule de type à toit ouvrant, et un deuxième type de véhicule de type à toit en verre fixe, les deux types de véhicules comprenant un même géométrie de zone arrière de toit en tôle, les barres de toit étant pourvues d'un même premier système d'au moins deux premières fixations en zone avant du véhicule, et étant pourvue d'un même système d'au moins une deuxième fixation, différente des premières fixations, au niveau de la portion arrière commune de toit en tôle.

## Patentansprüche

1. Dachgepäckträgersystem für ein Kraftfahrzeug, welches umfasst:
- einen Dachgepäckträger (1), der dafür ausgelegt ist, in der Längsrichtung (X) des Fahrzeugs montiert zu werden,
- wenigstens eine vordere Befestigungsvorrichtung (2), die eine erste Mutter (6) umfasst, die in dem Dachgepäckträger (1) verankert ist, wobei die vordere Befestigungsvorrichtung (2) dafür ausgelegt ist, an einer ersten Blechlage (12) befestigt zu werden und wenigstens ein Zwischenteil (30) zu durchqueren, das zwischen der Blechlage und dem Gepäckträger angeordnet ist, **dadurch gekennzeichnet, dass** das System umfasst:
- wenigstens eine hintere Befestigungsvorrichtung (3), die eine zweite Mutter (26) umfasst, die in dem Dachgepäckträger verankert ist, wobei die hintere Befestigungsvorrichtung dafür ausgelegt ist, zwei zweite Blechlagen (13, 14) des Karosserieoberteils des Fahrzeugs zu durchqueren, die voneinander beabstandet sind, wobei die Vorrichtung an wenigstens einer der zwei zweiten Blechlagen befestigt ist,
und dadurch, dass die hintere Befestigungsvorrichtung (3) eine verstellbare Abstandshaltervorrichtung (15) aufweist, die von der zweiten Mutter verschieden ist und geeignet ist, den Abstand zwischen einer Unterseite der zweiten Mutter und einer von einem Karosserieseitenelement des Fahrzeugs gestützten zweiten Blechlage auszugleichen, wobei sich die Abstandshaltervorrichtung einerseits an der Seite der zweiten Mutter und andererseits an der zweiten Blechlage abstützt,
und dadurch, dass die erste Mutter (6) einen zylindrischen Bereich (4) aufweist, der einen Abstandshalter mit vordefinierter Höhe und mit im Wesentlichen konstantem äußeren Querschnitt zwischen dem Dachgepäckträger (1) und einer Auflagefläche (16) der ersten Mutter (6) auf der ersten Blechlage (12) bildet, derart, dass er eine dafür vorgesehene Öffnung (41) des Zwischenteils (30) durchqueren kann.

2. Dachgepäckträgersystem nach Anspruch 1, welches wenigstens eine erste Mutter (6) aufweist, die in einen vorderen Abschnitt des Dachgepäckträgers (1) eingepresst ist, und wenigstens eine zweite Mutter (26) mit einer zur Achse der ersten Mutter parallelen Achse umfasst, die in einen hinteren Abschnitt des Dachgepäckträgers (1) eingepresst ist, wobei die Höhe der ersten Mutter (6) außerhalb des Gepäckträgers, nachdem sie eingepresst wurde, größer als die Höhe der zweiten Mutter (26) außerhalb des Gepäckträgers ist.

3. Dachgepäckträgersystem nach Anspruch 2, wobei die erste Mutter (6) eine zentrale axiale Öffnung (9) aufweist, die eine Basisfläche (16) aufweist, welche die zentrale axiale Öffnung umgibt und dafür ausgelegt ist, auf der ersten Blechlage (12) zur Anlage zu kommen, wobei auf der Basisfläche um die zentrale axiale Öffnung herum ein umlaufende Dichtrippe (17) verläuft.

4. Dachgepäckträgersystem nach einem der vorhergehenden Ansprüche, wobei der Abstandshalterabschnitt (15) der hinteren Befestigungsvorrichtung (3) eine Unterseite (38) aufweist, die dafür ausgelegt ist, an einer der zwei zweiten Blechlagen zur Anlage zu kommen, ein erstes Element (32) aufweist, das die Unterseite (38) trägt und einen ersten Ansatz (34) trägt, der dafür ausgelegt ist, in der entgegengesetzten Richtung an der anderen der zwei zweiten Blechlagen zur Anlage zu kommen, und ein zweites Element (33) aufweist, das einen zweiten Ansatz (35) trägt, der dafür ausgelegt ist, an der zweiten Mutter (26) zur Anlage zu kommen, wobei das erste Element (32) in das zweite Element (33) einschraubbar ist, um so ein Variieren des Abstands zwischen dem ersten Ansatz (34) und dem zweiten Ansatz (35) zu bewirken.

5. Dachgepäckträgersystem nach Anspruch 4, wobei das erste Element (32) mit einem zentralen Gewinde versehen ist, das eine Einschraubrichtung aufweist, die zur relativen Schraubsteigung des ersten Elements (32) im zweiten Element (33) entgegengesetzt ist, wobei das zentrale Gewinde dieselbe Gewindesteigung wie das Innengewinde der zweiten Mutter (26) aufweist.

6. Dachgepäckträgersystem nach Anspruch 4 oder 5, welches einen Dichtring (47) aus Polymermaterial aufweist, der am Gepäckträger (1) anliegend um die zweite Mutter (26) herum angeordnet ist.

7. Dachgepäckträgersystem nach Anspruch 6, welches außerdem eine Schraube (22) mit einem Gewinde, das zu den Innengewinden des ersten Elements (32) des Abstandshalters und der zweiten Mutter (26) komplementär ist, und mit einer Länge, die ausreichend ist, um den Abstandshalter (15) zu durchqueren und sich in der zweiten Mutter (26) festzuhaken, umfasst.

8. Verfahren zur Montage der Dachelemente eines Fahrzeugs, welches die Schritte umfasst:
- Durchbohren eines ersten Abschnitts (12) von Blech des Daches des Fahrzeugs an einer oder mehreren aneinander anliegenden Blechlagen,
- Durchbohren eines zweiten Abschnitts von Blech des Daches des Fahrzeugs an wenigstens zwei nicht aneinander anliegenden Blechlagen (13, 14),
- Anordnen eines Abstandshalters (15) mit einer durch einen Schraubvorgang verstellbaren Höhe im Bereich des zweiten durchbohrten Abschnitts des Dachbleches zwischen den zwei nicht aneinander anliegenden Blechen (13, 14),
- Bereitstellen eines Dachgepäckträgers (1) mit wenigstens einer ersten Mutter (6), die im Bereich eines ersten Längenabschnitts des Gepäckträgers eingepresst ist, und wenigstens einer zweiten Mutter (26), die auf derselben Seite des Gepäckträgers im Bereich eines anderen Längenabschnitts des Gepäckträgers eingepresst ist, wobei die erste eingepresste Mutter (6) über den Gepäckträger (1) mit einem lang gestreckten Abschnitt (4) mit konstantem Querschnitt hinausragt, der länger als der Abschnitt der zweiten Mutter (26) ist, der über den Gepäckträger (1) hinausragt,
- Einführen der ersten Mutter (6) vertikal durch ein äußeres Verkleidungselement (30) des Fahrzeugs hindurch, bis das untere Ende der ersten Mutter am ersten Blechabschnitt (12) des Daches des Fahrzeugs zur Anlage oder in dessen unmittelbare Nähe gebracht wird,
- Einführen und Einschrauben einer ersten Schraube (21) von unten in den ersten Blechabschnitt (12), um die erste Mutter (6) auf dem ersten Blechabschnitt (12) festzuziehen,
- Einführen und Festziehen einer zweiten Schraube von unten in die nicht aneinander anliegenden Bleche (13, 14), durch den Abstandshalter (15) hindurch und durch die zweite Mutter (26) hindurch, derart, dass der Abstandshalter (15) axial in dem verfügbaren Zwischenraum zwischen den nicht aneinander anliegenden Blechen (13, 14) angeordnet wird und anschließend die zweite Mutter (26) auf den Abstandshalter (15) oder auf das äußere von den nicht aneinander anliegenden Blechen gepresst wird.

9. Verfahren nach Anspruch 8, welches angewendet wird, um ein und dasselbe Dachgepäckträgersystem, das mit denselben Befestigungselementen ausgestattet ist, auf zwei Typen von Fahrzeugen zu befestigen, die denselben Typ von hinterer Befestigung auf dem Karosserieoberteil aufweisen und vorn am Dach unterschiedliche äußere Verkleidungselemente (30) aufweisen, die für einen ersten Fahrzeugtyp der Kontur eines festen Glasdaches entsprechen und für einen zweiten Fahrzeugtyp der Kontur eines Schiebe- oder Ausstelldaches entsprechen.

10. Verfahren nach Anspruch 9, welches angewendet wird, um die Dachgepäckträger einer Palette von Fahrzeugen zu montieren, die wenigstens zwei Typen von Fahrzeugen umfasst, darunter ein erstes Fahrzeug vom Typ mit Schiebe- oder Ausstelldach und ein zweiter Fahrzeugtyp mit festem Glasdach, wobei die zwei Fahrzeugtypen dieselbe Geometrie des hinteren Bereichs des Blechdaches umfassen, wobei die Dachgepäckträger mit demselben ersten System von wenigstens zwei ersten Befestigungen im vorderen Bereich des Fahrzeugs versehen sind und mit demselben System von wenigstens einer zweiten Befestigung, die von der ersten Befestigungen verschieden ist, im Bereich des gemeinsamen hinteren Abschnitts des Blechdaches versehen sind.

## Claims

1. Roof bar system for a motor vehicle, comprising
- a roof bar (1) configured to be assembled in the longitudinal direction (X) of the vehicle,
- at least one front fastening device (2) comprising a first nut (6) anchored in the roof bar (1), the front fastening device (2) being configured to be fixed onto a first thickness of metal sheet (12) and to pass through at least one intermediate piece (30) interposed between said thickness of metal sheet and the bar, **characterized in that** the system comprises
- at least one rear fastening device (3) comprising a second nut (26) anchored in the roof bar, the rear fastening device being configured to pass through two second thicknesses of metal sheet (13, 14) of the top of the vehicle separated from one another, the device being fastened onto at least one of the two second thicknesses of metal sheet, and **in that**
- the rear fastening device (3) comprises an adjustable spacer device (15), distinct from the second nut, capable of taking up the separation between a bottom face of the second nut, and a second thickness of metal sheet supported by a body side element of the vehicle, the spacer device bearing on the one side on said face of the second nut and on the other side on said second thickness of metal sheet,
and **in that** the first nut (6) comprises a cylindrical zone (4) forming a spacer of predefined height, and of substantially constant outer section, between the roof bar (1) and a bearing base (16) of the first nut (6) bearing against the first thickness of metal sheet (12), so as to be able to pass through a dedicated orifice (41) of the intermediate piece (30).

2. Roof bar system according to Claim 1, comprising at least one first nut (6) set in a front portion of the roof bar (1), comprising at least one second nut (26) of axis parallel to the axis of the first nut and set in a rear portion of the roof bar (1), the height outside the bar of the first nut (6), once set, being longer than the height outside the bar of the second nut (26).

3. Roof bar system according to Claim 2, in which the first nut (6) comprises a central axial orifice (9), comprises a basal face (16) surrounding the central axial orifice and configured to bear on the first thickness of metal sheet (12), said basal face carrying, around the central axial orifice, a circumferential sealing rib (17) .

4. Roof bar system according to one of the preceding claims, in which the spacer portion (15) of the rear fastening device (3) comprises a bottom face (38) configured to bear on one out of the two second thicknesses of metal sheet, comprises a first element (32) bearing the bottom face (38) and bearing a first shoulder (34) configured to bear, in the opposite direction, on the other out of the two second thicknesses of metal sheet, and comprises a second element (33) bearing a second shoulder (35) configured to bear on the second nut (26), the first element (32) being able to be screwed into the second element (33) so as to vary the distance between the first shoulder (34) and the second shoulder (35).

5. Roof bar system according to Claim 4, in which the first element (32) is drilled with a central threading having a thread direction that is the reverse of the relative thread pitch of the first element (32) in the second element (33), the central threading having the same thread pitch as the internal threading of the second nut (26).

6. Roof bar system according to Claim 4 or 5, comprising a sealing ring (47) made of polymer material placed against the bar (1) around the second nut (26).

7. Roof bar system according to Claim 6, also comprising a screw (22) of threading complementing the internal threadings of the first element of the spacer (32) and of the second nut (26), and of sufficient length to pass through the spacer (15) and to be caught in the second nut (26).

8. Method for assembling the roof elements of a vehicle, comprising the steps of:
- drilling a first portion (12) of metal sheet of the roof of the vehicle, over one or more contiguous thicknesses of metal sheet,
- drilling a second portion of metal sheet of the roof of the vehicle, over at least two non-contiguous thicknesses of metal sheet (13, 14),
- placing a spacer (15) of a height that can be adjusted by screwing in the second drilled portion of metal sheet of the roof, between the two non-contiguous metal sheets (13, 14),
- providing a roof bar (1) with at least one first nut (6) set in a first portion of length of the bar, and at least one second nut (26) set on the same face of the bar in another portion of length of the bar, the first set nut (6) protruding above the bar (1) by an elongate portion (4) of constant section, longer than the portion of the second nut (26) protruding above the bar (1),
- inserting the first nut (6) vertically through an outer cladding element (30) of the vehicle to place the bottom end of the first nut bearing on or in immediate proximity to the first portion of metal sheet screw (12) of the roof of the vehicle,
- inserting and screwing a first nut (21) from under the first portion of metal sheet (12) to tighten the first nut (6) on the first portion of metal sheet (12),
- inserting and tightening a second screw from below the non-contiguous metal sheets (13, 14), through the spacer (15) and through the second nut (26), so as to axially deploy the spacer (15) in the gap available between the non-contiguous metal sheets (13, 14) then press the second nut (26) onto the spacer (15) or onto the outermost of the non-contiguous metal sheets.

9. Method according to Claim 8, applied to assembling a same roof bar system provided with the same fastening elements, on two types of vehicles having a same type of rear fastening on the top, and having, at the front of the roof, different outer cladding elements (30), corresponding, for a first type of vehicle, to the outline of a fixed glass roof, and corresponding, for a second type of vehicle, to the outline of a sun roof.

10. Method according to Claim 9, applied for assembling the roof bars of a range of vehicles comprising at least two types of vehicles, including a first vehicle of the type with sun roof, and a second type of vehicle of the type with fixed glass roof, the two types of vehicles comprising the same geometry of rear roof zone made of metal sheet, the roof bars being provided with a same first system of at least two first fastenings in the front zone of the vehicle, and being provided with a same system of at least one second fastening, different from the first fastenings, in the common rear roof portion made of metal sheet.
